# EUROPEAN PATENT APPLICATION

(11) **EP 1 577 039 A1**
(43) Date of publication of application: **21.09.2005**
(21) Application number: 05251469.2
(22) Date of filing: 10.03.2005
(51) Int. Cl.: B23D 49/00, B25F 5/00, F16D 41/07, F16D 65/14

(54) **Braking mechanism for a jig saw**

(30) Priority: 16.03.2004 CN 200420025524
(71) Applicant: Positec Power Tools (Suzhou) Co., Ltd., Suzhou 215006 (CN)
(72) Inventor: Hai-Chun, Huan, Positec Power Tools Co., Ltd, Suzhou 215006 (CN)
(74) Representative: Stuttard, Garry Philip

(57) **Abstract**

The present invention relates to a braking mechanism comprising an inner wheel (30), a transmission rack (40) driven by a rotary gear (10) of the motor, a retaining rack (60), a rolling device (70) and a braking device (90). The inner wheel (30) defines a cylinder with a circumferential surface defining a cam surface (35) and a stopper (36). The retaining rack (60) comprises at least a pair of projections (63) defining a notch (64) therebetween for receiving a rolling device (70). The retaining rack (60) is mounted radially on the inner wheel (30) with the projections (63) nested between the inner wheel (30) and the transmission rack (40). In the non-braking state, the transmission rack (40) engages the cam surface (35) through the rolling device (70). During braking, the braking device stops the retaining rack (60), the rolling device (70) rolls away from the cam surface (35) and the projections (63) contact the stopper (36) to stop the inner wheel (30).

## Description

The present invention relates to a braking mechanism for a power tool.

A power tool generally exploits a rotary motor to drive a working mechanism via a transmission mechanism. When power is switched off, the working mechanism should stop instantly for safety reasons. Due to the large inertia of the rotary motor, the power tool often incorporates a braking mechanism to assist in decelerating the working mechanism. However if the braking mechanism is also arranged to halt the rotary motor and the transmission mechanism, the size of the rotary motor may induce an internal force which damages the transmission mechanism and makes a loud noise.

Figure 8 relates to the disclosure of DE-4418102A in which a braking mechanism comprises an initiator device 12, a passive device 14, a retaining device 26 and a roller 24. The passive device 14 is a cylinder defining a uniform face to cooperate with the roller 24. The initiator device 12 drives the retaining device 26 to move in the same direction. When the roller 24 interferes with the passive device 14 and the initiator device 12, the initiator device 12, the passive device 14 and the retaining device 26 move together. During braking, the retaining device 26 is retained, the roller 24 is displaced and the passive device 14 moves till the roller 24 interferes with the initiator device 12 and the passive device 14 again, whilst the initiator device 12 rolls on. This braking mechanism has two disadvantages. Firstly, the uniform face of the passive device 12 is a climbing face and little free movement of the roller 24 is allowed so that if the precision of manufacture is low, brake failure may occur. Secondly, the initiator device 12 drives the passive device 14 and brakes through the retaining force of the roller 24 so that the roller 24 may easily deform.

The present invention is based on the recognition that a braking mechanism which is adapted to stop the reciprocation of a reciprocative power tool without intervening directly in the rotation of the rotary motor will prolong the lifetime of the power tool.

Thus viewed from one aspect the present invention provides a braking mechanism for a reciprocative power tool comprising:
an inner wheel having a generally columnar configuration which defines a first axial bore for receiving a rotary axle and a second offset bore capable of receiving a coupling shaft for coupling the inner wheel to a reciprocative blade, said inner wheel comprising:
   a substantially cylindrical main body whose circumferential surface adjacent to a first end extends into a stepped sleeve, wherein the stepped sleeve defines a plurality of substantially circumferentially equidistant cam surfaces, each cam surface positioned at or near to one of a plurality of radially projecting stoppers;
a transmission rack mounted radially on the circumferential faces of the stoppers, wherein the transmission rack is engageable with a rotary gear;
a retaining rack comprising
   an annular main body which defines a substantially central hole and at least one brake shoe on its circumferential surface,
   a plurality of pairs of spaced apart projections distributed on an end braking face of the annular main body, each pair of projections being spaced apart by an intervening notch,
   wherein the retaining rack is mounted radially on the inner wheel with the projections nested in voids between the transmission rack and the stepped sleeve and with the end braking face seated on the stoppers;
a rolling device captured in each intervening notch; and
a braking device capable of impinging on the brake shoe,
   whereby:
   when the braking mechanism is in a non-braking state, the braking device is remote from the brake shoe and the rolling device engages the cam surface so as to rotationally couple the transmission rack and the inner wheel to cause the inner wheel to rotate on the rotary axle and drive the reciprocative blade reciprocatively and
   when the braking mechanism is in a braking state, the braking device impinges on the brake shoe to selectively decelerate the retaining rack and displace the rolling device from the cam surface so as to decouple the inner wheel and the transmission rack and to cause the inner wheel to decelerate and stop the reciprocation of the reciprocative blade.

The present invention achieves a stable braking action with low noise output. The braking mechanism has convenient longevity, whilst being manufactured easily.

Preferably when the braking mechanism is in a braking state, the inner wheel decelerates until the stopper collides with the projection.

Preferably the rolling device is a cylindrical roller or ball bearing. Preferably the rolling device (eg cylindrical roller) is axially disposed in the notch.

Preferably the transmission rack is a gear rim defining an axis hole along the axial direction. The transmission rack may be a gear rim with a toothed circumferential surface.

Preferably the retaining rack comprises:
an annular main body which defines at least one pair of brake shoes which are diametrically opposed on the circumferential surface of the annular main body.

The or each brake shoe is typically protruberant. The or each brake shoe may be stepped.

In a preferred embodiment the braking mechanism further comprises:
a torsion spring restrained between the inner wheel and the retaining rack with a tendency to urge the rolling device onto the cam surface.

The torsion spring is typically helical. The torsion spring may terminate at a first end in a first finger portion extending radially inwardly and at a second end in a second finger portion extending radially outwardly. The first finger portion may be captured in a part radial groove in a second end of the inner wheel and the second finger portion may be captured in a radial groove in the annular main body of the retaining rack.

Preferably the second end of the cylindrical main body of the inner wheel is capped with an annular retaining plate and the braking mechanism further comprises:
a retaining device engaged with the retaining plate and the retaining rack.
   Particularly preferably the retaining device is a check ring or a forelock.

Preferably the inner wheel defines at least three (preferably three) cam surfaces, each positioned substantially adjacent to one of at least three (preferably three) radially projecting stoppers.

The or each cam surface is typically a prominent cam surface. The prominent cam surface may have a tapered leading edge extending into a plateau. The plateau may extend into the stopper at its trailing edge.

The plurality of pairs of spaced apart projections may be substantially evenly distributed on the end braking face of the annular main body. Each pair of projections may be unequally sized.

Viewed from a further aspect the present invention provides a reciprocative power tool comprising:
a motor-driven rotary gear;
a rotary axle;
a coupling shaft;
a reciprocative blade; and
a braking mechanism as hereinbefore defined wherein the transmission rack engages the rotary gear, the rotary axle is received in the first axial bore and the coupling shaft is received in the second offset bore and couples the inner wheel to the reciprocative blade.

Preferably the reciprocative power tool is a jigsaw.

Viewed from a yet further aspect the present invention provides a brake mechanism, characterized in that: it comprises a inner wheel, a transmission rack, a retain rack, a rolling device and a brake device, the inner wheel defines a cam face and a stopper on its side face, the transmission rack engages outside of the cam face of the inner wheel, the retain rack comprises a pair of projections defining a notch therebetween for receiving the rolling device extending from a side, the projection is received between the outside of the inner wheel and the transmission rack, the retain rack further comprises a brake portion for cooperating with the brake device; when the brake mechanism is under a first condition, the rolling device, the cam face and the transmission rack engages, when the brake mechanism is under a second condition, the rolling device depart from the transmission rack.

The present invention will now be described in a non-limitative sense with reference to accompanying Figures 1 to 7 in which:
Fig. 1 is a partial cross-sectional view of an embodiment of a jigsaw of the present invention;
Fig. 2 is a perspective exploded view of an embodiment of a braking mechanism of the present invention;
Fig. 3 is a perspective view of the retaining rack illustrated in Figure 2;
Fig. 4 is a perspective view of the inner wheel illustrated in Figure 2;
Fig. 5 is an assembled view of the embodiment of Figure 2;
Fig. 6 is a cross-sectional view along A-A of Fig. 5; and
Fig. 7 is a perspective view of the reciprocating board illustrated in Figure 1.

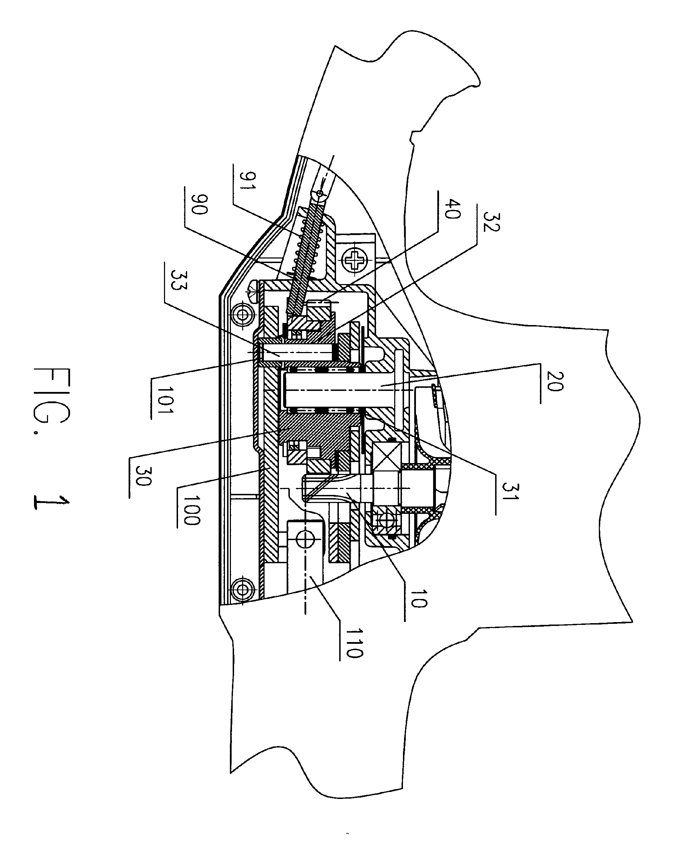

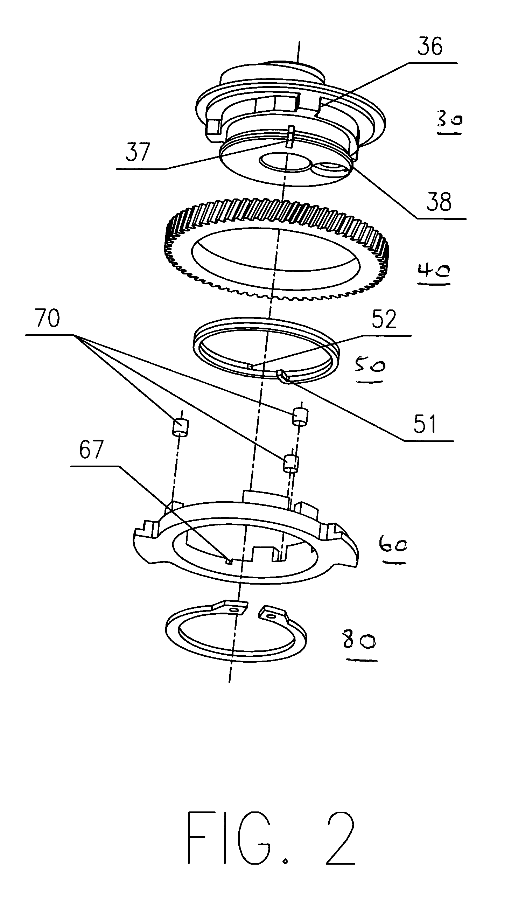

Figure 1 illustrates an embodiment of a jigsaw of the invention in which an embodiment of the braking mechanism of the invention (in exploded view in Figure 2) is used to control the reciprocation of a reciprocating board 110, a reciprocating rod 100 and a saw blade 120. The saw blade 120 is connected to the reciprocating board 100 through the reciprocating rod 110.

Referring to figures 1 and 2, the braking mechanism comprises generally an inner wheel 30, a transmission rack 40 in the form of a gear rim engaged with a motor driven rotary gear 10, a torsion spring 50, a retaining rack 60, rollers 70, a retaining device 80 in the form of a check ring and a braking pin 90 cooperative with a switch.

The retaining rack 60 comprises an annular main body 60a which defines a central hole 62 and two brake shoes 61 which are diametrically opposed on the circumferential surface of the annular main body 60a. The retaining rack 60 further comprises three pairs of spaced apart, unequally sized projections 63 evenly distributed on an end braking face of the annular main body 60a and a radial groove 67 in the end braking face. Each pair of projections 63 is spaced apart by an intervening notch 64 in which is captured an axially disposed roller 70.

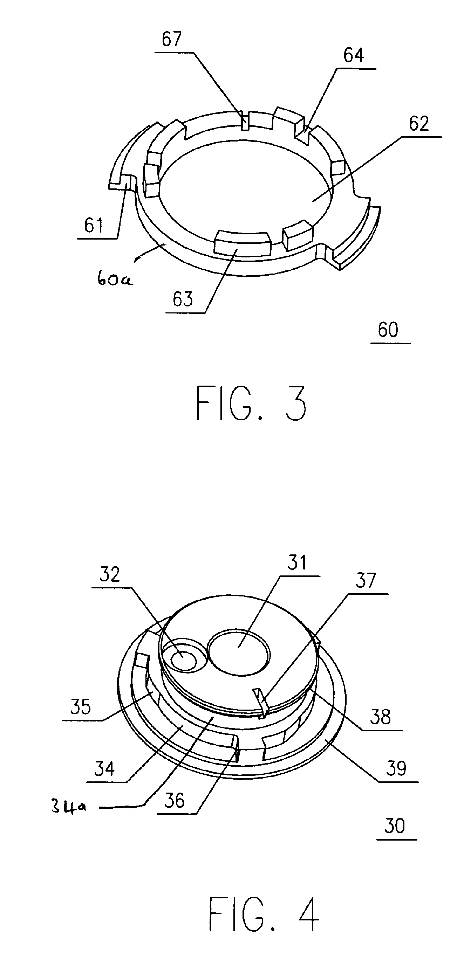

Referring to figure 4, the inner wheel 30 is generally a stepped column which defines a first axial bore 31 and a second offset bore 32. Specifically, the inner wheel 30 comprises a substantially cylindrical main body 34a whose circumferential surface adjacent to a first end of the main body 34a extends into an integral stepped sleeve 34. The stepped sleeve 34 defines three substantially circumferentially equidistant, prominent cam surfaces 35 each positioned substantially adjacent to one of three substantially circumferentially equidistant, radially projective stoppers 36. A first surface portion of the first end of the main body 34a extends into an offset substantially cylindrical body portion 300. The second offset bore 32 terminates at the surface portion of the first end of the main body 34a which does not extend into the body portion 300 (*ie* which is not the first surface portion) and the first axial bore terminates at the end of the body portion 300. A second end of the main body 34a remote from the stepped sleeve 34 is capped with an annular retaining plate 38 in which the first axial bore 31 and the second offset bore 32 are coterminous. The annular retaining plate 38 defines a part radial groove 37.

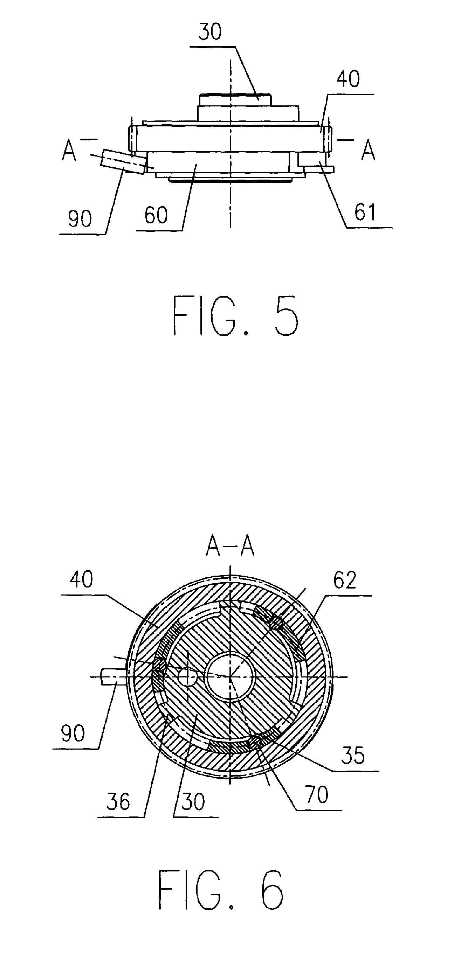

Referring to figures 2 and 5, the transmission rack 40 is mounted radially on the circumferential faces of the stoppers 36. The retaining rack 60 is mounted radially on the inner wheel 30 with the projections 63 nested in the voids between the transmission rack 40 and the stepped sleeve 34 and with the end braking face seated on the stoppers 36.

The torsion spring 50 is helical and terminates at a first end in a first finger portion 51 extending radially inwardly and at a second end in a second finger portion 52 extending radially outwardly. The first finger portion 51 is captured in the part radial groove 37 and the second finger portion 52 is captured in the radial groove 67. The torsion spring 50 urges the rollers 70 towards the cam surfaces 35.

The retaining device 80 engages the annular retaining plate 38 and the retaining rack 60 to ensure that the retaining rack 60 does not run away from the inner wheel 30.

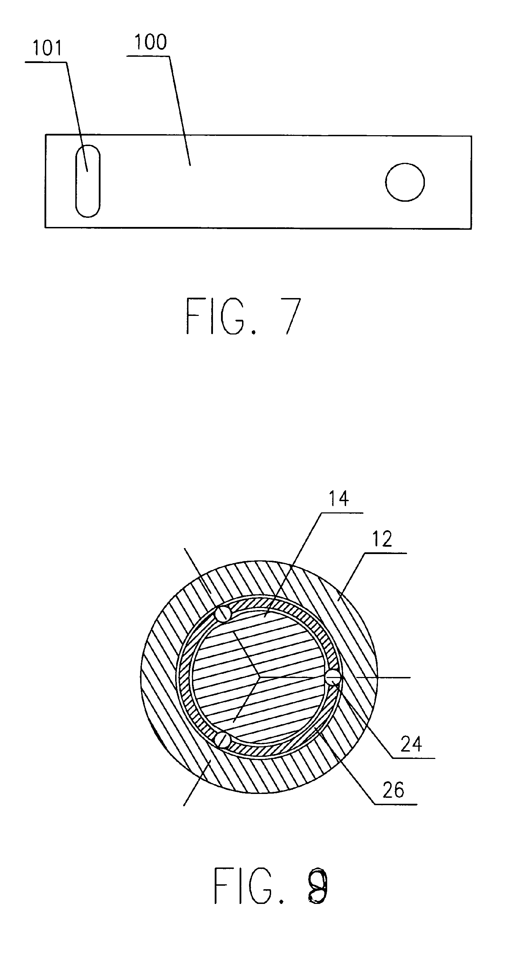

Referring to figures 1, 5 and 7, the rotary power provided by the rotary gear 10 is transmitted to the inner wheel 30 through the transmission rack 40. The inner wheel 30 turns around a rotary axle 20 in the first axial bore 31. An eccentric rotary shaft 33 is received in the second offset bore 32 with one end engaged with a transverse slide slot 101 in the reciprocating board 100. When the inner wheel 30 rotates, the eccentric rotary shaft 33 drives the reciprocating board 100, the reciprocating rod 110 and the blade saw 120 to-and-fro.

The braking device 90 cooperates with a power switch. When the power switch is moved to "on", the braking device 90 is remote from the brake shoes 61. Referring to figure 6, the torsion spring 50 has a tendency to urge the roller 70 onto the cam surface 35 and into contact with the transmission rack 40. When the transmission rack 40 rotates, the frictional force induced between the transmission rack 40 and the roller 70 gives the roller 70 a tendency to roll on the cam surface 35. Provided that the frictional force is large enough, this tendency causes the transmission rack 40, the retaining rack 60 and the inner wheel 30 to rotate together at a constant speed.

When the power switch is moved to "off", a spring 91 drives the braking device 90 to impinge on the brake shoes 61 to selectively decelerate the retaining rack 60. Due to inertia, the inner wheel 30 and the transmission rack 40 continue momentarily to rotate at a constant speed causing the roller 70 to be displaced from the cam surface 35 and decoupling the transmission rack 40 from the inner wheel 30. The inner wheel 30 then decelerates until the stopper 36 collides with the projection 63. The motor and the transmission rack 40 rotate until they lose inertia.

## Claims

1. A braking mechanism for a reciprocative power tool comprising:
an inner wheel 30 having a generally columnar configuration which defines a first axial bore 31 for receiving a rotary axle 20 and a second offset bore 32 capable of receiving a coupling shaft 33 for coupling the inner wheel 30 to a reciprocative blade 120, said inner wheel 30 comprising:
a substantially cylindrical main body 34a whose circumferential surface adjacent to a first end extends into a stepped sleeve 34, wherein the stepped sleeve 34 defines a plurality of substantially circumferentially equidistant cam surfaces 35, each cam surface 35 positioned at or near to one of a plurality of radially projecting stoppers 36; a transmission rack 40 mounted radially on the circumferential faces of the stoppers 36, wherein the transmission rack 40 is engageable with a rotary gear 10;
a retaining rack 60 comprising
an annular main body 60a which defines a substantially central hole 62 and at least one brake shoe 61 on its circumferential surface,
a plurality of pairs of spaced apart projections 63 distributed on an end braking face of the annular main body 60a, each pair of projections 63 being spaced apart by an intervening notch 64,
wherein the retaining rack 60 is mounted radially on the inner wheel 30 with the projections 63 nested in voids between the transmission rack 40 and the stepped sleeve 34 and with the end braking face seated on the stoppers 36;
a rolling device 70 captured in each intervening notch 64; and
a braking device 90 capable of impinging on the brake shoe 61,
whereby:
when the braking mechanism is in a non-braking state, the braking device 90 is remote from the brake shoe 61 and the rolling device 70 engages the cam surface 35 so as to rotationally couple the transmission rack 40 and the inner wheel 30 to cause the inner wheel 30 to rotate on the rotary axle 20 and drive the reciprocative blade 120 reciprocatively and
when the braking mechanism is in a braking state, the braking device 90 impinges on the brake shoe 61 to selectively decelerate the retaining rack 60 and displace the rolling device 70 from the cam surface so as to decouple the inner wheel 30 and the transmission rack 40 and to cause the inner wheel 30 to decelerate and stop the reciprocation of the reciprocative blade 120.

2. A braking mechanism as claimed in claim 1 wherein when the braking mechanism is in a braking state, the inner wheel 30 decelerates until the stopper 36 collides with the projection 63.

3. A braking mechanism as claimed in claim 1 wherein the rolling device 70 is a roller or ball bearing.

4. A braking mechanism as claimed in claim 1, 2 or 3 wherein the transmission rack 40 is a gear rim defining an axis hole along the axial direction.

5. A braking mechanism as claim in any preceding claim 1 wherein the retaining rack 60 comprises:
an annular main body 60a which defines at least one pair of brake shoes 61 which are diametrically opposed on the circumferential surface of the annular main body 60a.

6. A braking mechanism as claimed in any preceding claim further comprising:
a torsion spring 50 restrained between the inner wheel 30 and the retaining rack 60 with a tendency to urge the rolling device 70 onto the cam surface 35.

7. A braking mechanism as claimed in any preceding claim wherein a second end of the main body 34a is capped with an annular retaining plate 38 and the braking mechanism further comprises:
a retaining device 80 engaged with the retaining plate 38 and the retaining rack 60.

8. A braking mechanism as claimed in claim 7 wherein the retaining device 80 is a check ring.

9. A braking mechanism as claimed in any preceding claim wherein the inner wheel 30 defines three cam surfaces 35, each positioned substantially adjacent to one of three radially projecting stoppers 36.

10. A reciprocative power tool comprising:
a motor-driven rotary gear 10;
a rotary axle 20;
a coupling shaft 33;
a reciprocative blade 120; and
a braking mechanism as defined in any preceding claim wherein the transmission rack 40 engages the rotary gear 10, the rotary axle 20 is received in the first axial bore 31 and the coupling shaft 33 is received in the second offset bore 32 and couples the inner wheel 10 to the reciprocative blade.

11. A reciprocative power tool as claimed in claim 10 being a jigsaw.
